# EUROPÄISCHE PATENTANMELDUNG

(11) **EP 0 521 281 A1**
(43) Veröffentlichungstag der Anmeldung: **07.01.1993**
(21) Anmeldenummer: 92108439.8
(22) Anmeldetag: 19.05.1992
(51) Int. Cl.: B28B 11/00, B28B 21/42

(54) **Verfahren zur stirnseitigen Abdichtung von Kanälen in einem keramischen Träger**

(30) Priorität: 23.05.1991 DE 4116736
(71) Anmelder: ABB PATENT GmbH, D-68309 Mannheim (DE)
(72) Erfinder: Rohr, Franz Josef, Dr., W-6941 Abtsteinach (DE); Hug, Kuno, W-6900 Heidelberg (DE); Stadelmann, Heinz, Dr., W-6906 Leimen (DE)
(74) Vertreter: Rupprecht, Klaus, Dipl.-Ing.

(57) **Zusammenfassung**

Mit der Erfindung werden zwei Verfahrensvarianten zur Abdichtung eines Gaskanals (3) in einem keramischen Träger (2) vorgeschlagen. Gemäß einer ersten Verfahrensvariante wird eine extrudierte und getrocknete Abdeckplatte (11) auf die Stirnseite (5) eines extrudierten und getrockneten Trägers (2) gedrückt und die gesamte Anordnung gesintert. Die zu kontaktierenden keramischen Flächen (5,10) werden zuvor mit Wasser angefeuchtet. Bei der zweiten Verfahrensvariante wird in den Kanal (3) des Trägers (2) eine Extrusionsmasse (8) eingefüllt und mit einem Stempelwerkzeug (9) und einer Unterlage (7) zu einer Wand geformt, die den Kanal (3) abschließt.

## Beschreibung

Die Erfindung bezieht sich auf ein Verfahren zur stirnseitigen Abdichtung von Kanälen in einem extrudierten keramischen Träger.

Das Verfahren ist vorgesehen zur Anwendung bei der Herstellung von Hochtemperatur-Brennstoffzellenanordnungen, die einen extrudierten keramischen Träger, z.B. eine Trägerplatte, mit Gaskanälen aufweisen und die auf einer Stirnseite des Trägers einen gasdichten Abschluß der Gaskanäle erforderlich machen.

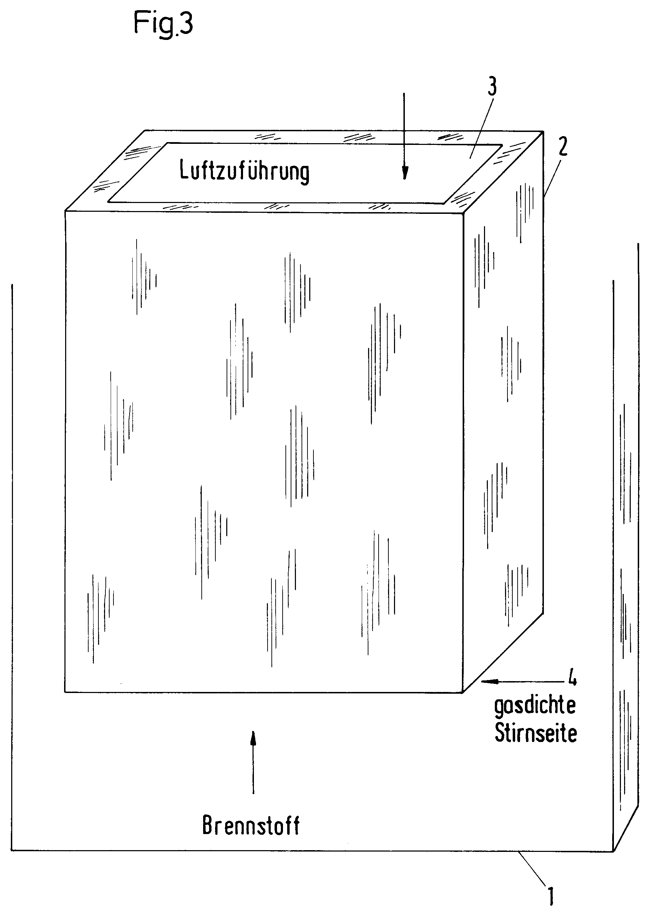

In Figur 3 ist schematisch eine solche Anordnung dargestellt, wobei innerhalb einer äußeren Hülle 1 ein keramischer Träger 2 mit einem Kanal 3 angeordnet ist. Die in Figur 3 unten liegende Stirnseite 4 des Trägers 2 ist abgeschlossen, um z.B. ein außen am Träger 2 vorbeigeleitetes Brenngas von einer in den Kanal 3 geleiteten Luft zu trennen. Nicht dargestellt sind Brennstoffzellen, die in einer praktischen Anwendung auf den äußeren Hauptflächen des Trägers 2 angeordnet sind.

Der Träger 2 ist nach der Extrusion zunächst an beiden Stirnseiten offen. Eine denkbare Abdichtung durch Einspannen des Trägers in eine Preßdichtung wäre ungeeignet, da der Träger aufgrund der beim Betrieb auftretenden Wärmespannungen an einem Ende frei beweglich sein muß.

Der Erfindung liegt die Aufgabe zugrunde, ein geeignetes Verfahren zur gasdichten Abdichtung einer Stirnseite eines mit Kanälen versehenen Trägers anzugeben.

Diese Aufgabe wird gemäß einer ersten Variante gelöst durch ein Verfahren zur stirnseitigen Abdichtung von Kanälen in einem keramischen Träger, mit nachstehenden Verfahrensschritten:
a) Bereitstellen eines getrockneten, extrudierten, keramischen Trägers, z.B. einer Trägerplatte, mit wenigstens einem durchgehenden Gaskanal sowie einer keramischen Abdeckplatte, die ebenfalls extrudiert und getrocknet ist und deren Hauptflächen die gleichen Abmessungen wie die stirnseitige Fläche des Trägers haben,
b) Schleifen der zu verbindenden Oberflächen der Trägerstirnseite und der Abdeckplatte um planparallele Flächen herzustellen,
c) Anfeuchten der zu verbindenden Oberflächen des Trägers und der Abdeckplatte mit Wasser und
d) Auflegen der Abdeckplatte auf die Stirnseite des Trägers, Pressen und Sintern der Anordnung.

Die Aufgabe wird außerdem gemäß einer zweiten Variante gelöst durch ein Verfahren zur stirnseitigen Abdichtung von Kanälen in einem keramischen Träger, mit nachstehenden Verfahrensschritten:
a) Bereitstellen eines getrockneten, extrudierten, keramischen Trägers, der wenigstens einen durchgehenden Gaskanal aufweist,
b) Einfüllen einer definierten Menge einer frisch angesetzten keramischen Extrusionsmasse in den Kanal oder die Kanäle des Trägers,
c) Auflegen und Fixieren des Trägers mit der zu verschließenden Stirnseite auf einer festen Unterlage,
d) Einführen eines an die Kanalabmessungen angepaßten Stempelwerkzeugs von der offenen Stirnseite her in den wenigstens einen Kanal des Trägers,
e) Pressen der Extrusionsmasse gegen die Unterlage, wobei die Extrusionsmasse die Innenwände des wenigstens einen Kanals anfeuchtet und eine innige Verbindung zwischen der Extrusionsmasse und den Kanalwänden herstellt und
f) Sintern des so einseitig verschlossenen Trägers.

Bei der zweiten Verfahrensvariante ist es wesentlich, daß die eingefüllte Masse noch die ursprüngliche Feuchte besitzt, um beim Einpreßvorgang die Innenwände der Kanäle leicht anfeuchten zu können; dies führt zur plastischen Erweichung der im Kontakt mit der Extrusionsmasse befindlichen Kanalwände und daher zu einer innigen Verbindung zwischen Wand und Extrusionsmasse. Außerdem ist wesentlich, daß die Extrusionsmasse vor dem Einbringen in die Kanäle ebenfalls extrudiert wird, um dieselbe Vorverdichtung wie bei dem extrudierten Träger zu erzielen. Nur dann ist gewährleistet, daß das Sinterverhalten sowie das ausgebildete Gefüge des Trägers und der Extrusionsmasse identisch sind. Wenn dies nicht der Fall ist, bilden sich schon beim Sintern aufgrund des unterschiedlichen Sinterverhaltens Risse aus.

Beide Lösungsvarianten ermöglichen die Herstellung einer auf einer Stirnseite gasdicht verschlossenen Trägerplatte, die ohne eine Spannvorrichtung in eine Brennstoffzellenanordnung eingesetzt werden kann.

Die beiden Verfahrensvarianten sind in der Zeichnung dargestellt.

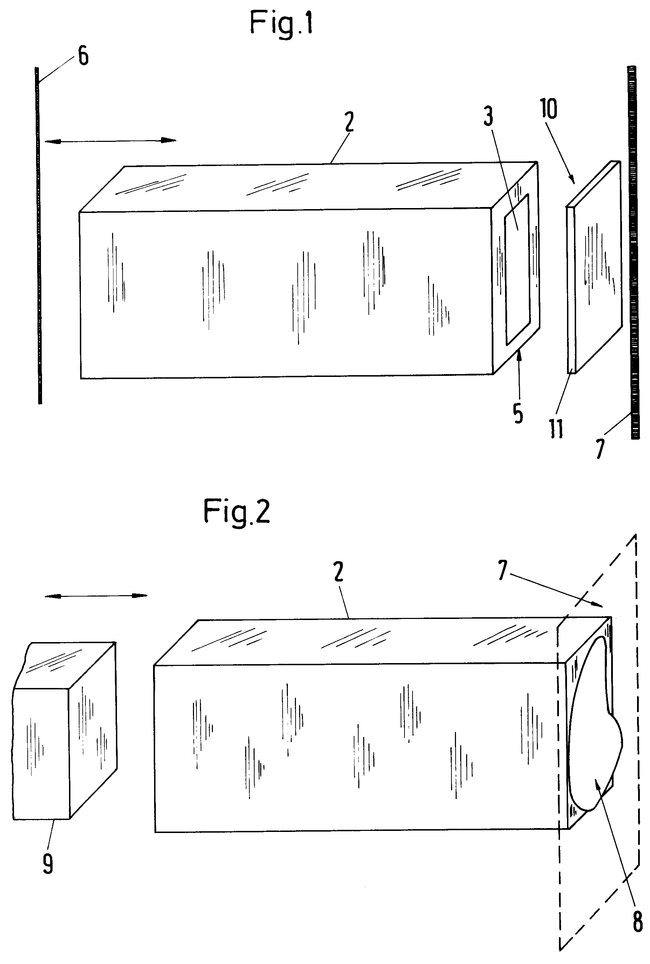

Figur 1 zeigt eine Anordnung zur Durchführung der ersten Verfahrensvariante. Dabei ist ein Träger 2 mit einem Kanal 3 dargestellt und eine Abdeckplatte 11. Die Abdeckplatte 11 kann ein extrudiertes keramisches Band sein. Der extrudierte und getrocknete Träger 2 weist eine überschliffene und angefeuchtete Stirnseite 5 auf, die mit einer ebenfalls angefeuchteten Oberfläche 10 der extrudierten und getrockneten Abdeckplatte 11 verbunden werden soll. Mit Hilfe einer angedeuteten Preßvorrichtung 6 wird der Träger 2 auf die Abdeckplatte 11 und gegen eine feststehende Unterlage 7 gedrückt, wobei der Anpreßdruck auch während des anschließenden Sintervorgangs aufrechterhalten bleibt. Bei senkrechter Anordnung der in Figur 1 gezeigten Teile könnte das Anpressen des Trägers 2 gegen die Abdeckplatte 11 während des Sintervorganges einfach durch Auflegen eines Gewichts, z.B. eines Keramikblocks, als Preßvorrichtung 6 erfolgen.

In Figur 2 ist eine Anordnung zur Durchführung der zweiten Verfahrensvariante dargestellt. In dieser Anordnung ist ein Träger 2 mit in der Zeichnung nicht sichtbarem Kanal mit eingefüllter Extrusionsmasse 8 in eine Preßvorrichtung eingesetzt. Die Preßvorrichtung besteht aus einem feststehenden Preßunterteil 7 und einem Stempelwerkzeug 9, das an die Form und die Abmessungen des Kanalquerschnitts angepaßt ist. Mit dem Stempelwerkzeug 9 wird die Extrusionsmasse 8 gegen die Unterlage 7 und an die Innenwände des Kanals im Träger 2 gedrückt. Der so einseitig verschlossene Träger 2 wird anschließend aus der Preßvorrichtung entnommen und gesintert.

## Patentansprüche

1. Verfahren zur stirnseitigen Abdichtung von Kanälen in keramischen Trägern, gekennzeichnet durch nachstehende Schritte:
a) Bereitstellen eines getrockneten, extrudierten, keramischen Trägers, z.B. einer Trägerplatte, mit wenigstens einem durchgehenden Gaskanal sowie einer keramischen Abdeckplatte, die ebenfalls extrudiert und getrocknet ist und deren Hauptflächen die gleichen Abmessungen wie die stirnseitige Fläche des Trägers haben,
b) Schleifen der zu verbindenden Oberflächen der Trägerstirnseite und der Abdeckplatte um planparallele Flächen herzustellen,
c) Anfeuchten der zu verbindenden Oberflächen des Trägers und der Abdeckplatte mit Wasser und
d) Auflegen der Abdeckplatte auf die Stirnseite des Trägers, Pressen und Sintern der Anordnung.

2. Verfahren zur stirnseitigen Abdichtung von Kanälen in einem keramischen Träger, gekennzeichnet durch nachstehende Schritte:
a) Bereitstellen eines getrockneten, extrudierten, keramischen Trägers, der wenigstens einen durchgehenden Gaskanal aufweist,
b) Einfüllen einer definierten Menge einer frisch angesetzten keramischen Extrusionsmasse in den Kanal oder die Kanäle des Trägers im Bereich der abzudichtenden Stirnflächen,
c) Auflegen und Fixieren des Trägers mit der zu verschließenden Stirnseite auf einer festen Unterlage,
d) Einführen eines an die Kanalabmessungen angepaßten Stempelwerkzeugs von der offenen Stirnseite her in den wenigstens einen Kanal des Trägers,
e) Pressen der Extrusionsmasse gegen die Unterlage, wobei die Extrusionsmasse die Innenwände des wenigstens einen Kanals anfeuchtet und eine innige Verbindung zwischen der Extrusionsmasse und den Kanalwänden herstellt und
f) Sintern des so einseitig verschlossenen Trägers.
